# EUROPEAN PATENT SPECIFICATION

(11) **EP 0 298 551 B1**
(45) Date of publication and mention of the grant of the patent: **20.01.1993**
(21) Application number: 88201350.1
(22) Date of filing: 29.06.1988
(51) Int. Cl.: B60Q 1/06

(54) **Device for adjusting the orientation of headlights of motor-vehicles**
Einstelleinrichtung der Neigung und Richtung von Fahrzeugscheinwerfern
Dispositif pour ajuster l'orientation des phares d'un véhicule

(30) Priority: 08.07.1987 IT 2122087
(43) Date of publication of application: 11.01.1989
(73) Proprietor: FIAT AUTO S.p.A., 10135 Torino (IT)
(72) Inventor: Villa, Ezio, I-20020 Arese Milan (IT); Guelfi, Giorgio, I-20159 Milan (IT); Susa, Andrea, I-20010 Vanzago Milan (IT); Vitale, Carmelo, I-20076 Mozzate Como (IT)
(74) Representative: De Carli, Erberto

(56) References cited:
- DE-A- 3 028 700
- DE-A- 3 102 375
- FR-A- 2 319 512
- FR-A- 2 471 883

## Description

The traffic-governing regulations prescribe that the light beams emitted by the headlights of the motor-vehicles are bounded in height and width within determined dimensions, in order to correctly lighten the road, as well as in order to prevent other drivers'eyes from being dazzled when vehicles cross.

In the use of cars, misorientations can occur in the angle of the light beams, e.g., due to impacts and vibrations transmitted by the bodywork, or due to the load conditions, which may vary within a minimum and a maximum.

Inasmuch as the changes in light beam angle have a negative influence on the lighting depth and on the dazzling conditions, the headlights are generally equipped with devices which make it possible their vertical and horizontal orientation to be adjusted, in order to restore the optimum orientation conditions. FR-A-2 319 512 shows a device according to the preamble of claim 1.

The general purpose of the present invention is to provide a device of the above said type, which can be driven in an easy and comfortable way, which is safe and reliable in function, and which has a particularly compact, simple and reliable structure.

The above purpose is achieved by means of a device according to claim 1.

In that way, said first and second screw spindles can be turned in and turned out inside their respective bushes by means of their respective drive bevel gears, and, consequently, through their pivots, they gradually shift the headlight in the longitudinal directions, causing it to tilt relatively to the transversal axis and the vertical axis formed by the two pivots which remain stationary.

Furthermore, the above-said first screw spindle can be turned in and turned out integrally with the bush, relatively to the further bush, by making said box revolve and shifting the above-said finger from a slot into another slot, in such a way that the headlight is longitudinally shifted by large steps, in order to tilt relatively to the transversal axis formed by the two pivots which remain stationary.

Therefore, in a device the means are advantageously combined, which make it possible the orientation of the headlights to be adjusted, both when fine adjustements, and when larger shifts are necessary, in particular in case of changes in motor-vehicle load.

Characteristics and advantages of the finding are now explained by referring to the thereto attached figures from 1 to 4, wherein for non-limitative exemplifying purposes, a preferred form of embodiment of the same invention is depicted.
Figure 1 shows a front view of a headlight equipped with a device for adjusting the orientation thereof, having a structure according to the presente invention;
Figure 2 shows a top view of the headlight of Figure 1;
Figure 3 shows a partial sectional view according to the plane identified by path III-III of Figure 1, shown on an enlarged scale relatively to Figure 1;
Figure 4 shows a partial sectional view according to the plane identified by path IV-IV of Figure 1, also shown on an enlarged scale relatively to Figure 1.

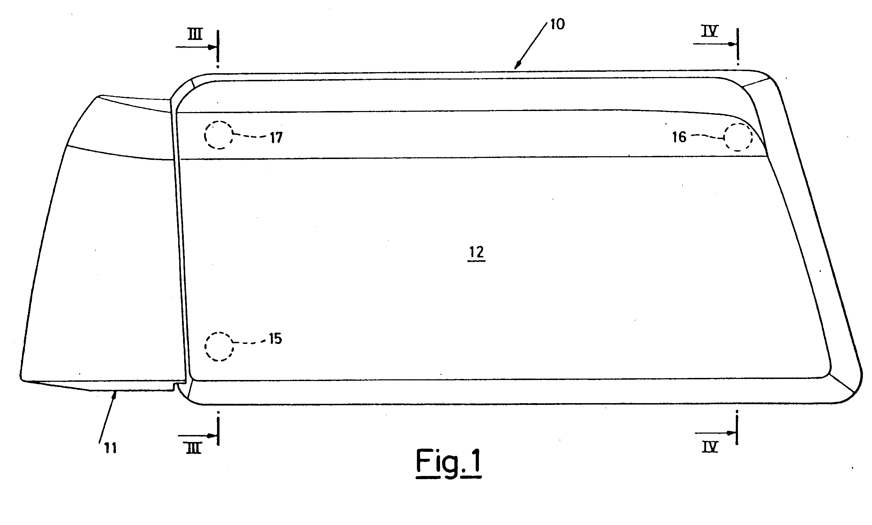

In Figure 1, the headlight of a motor-vehicle is generally indicated by the reference number 10, and by the reference number 11 the turn signal incorporated with it is indicated.

The headlight is closed in its front portion by a transparent wall 12, which performs the function of refracting the light beam emitted by a lamp not shown in the figures.

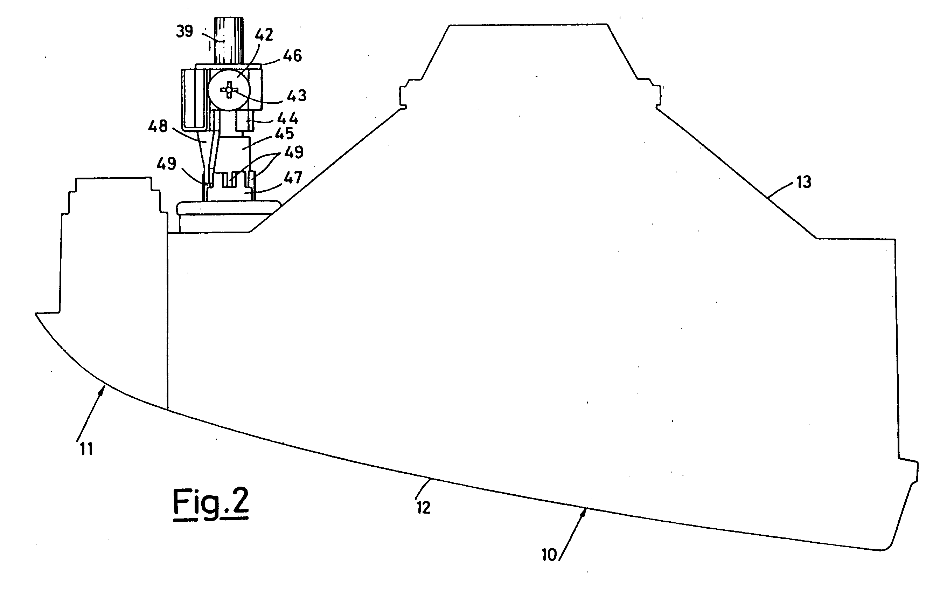

The transparent wall 12 is fastened to a container, indicated by the reference number 13, schematically depicted, and visible in figures 2, 3 and 4.

The container is fastened in its turn to the vehicle bodywork by means of connection means, not shown in the figures.

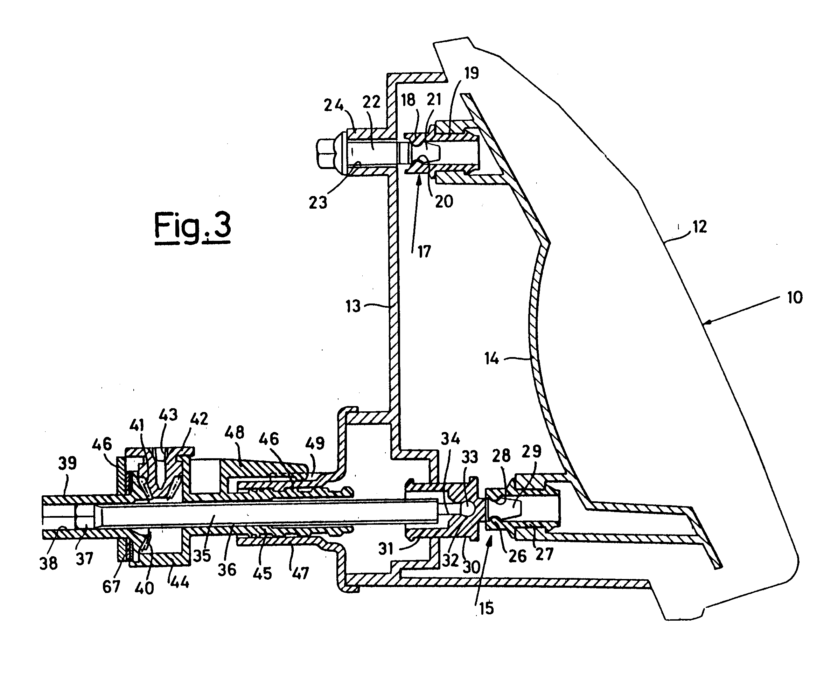

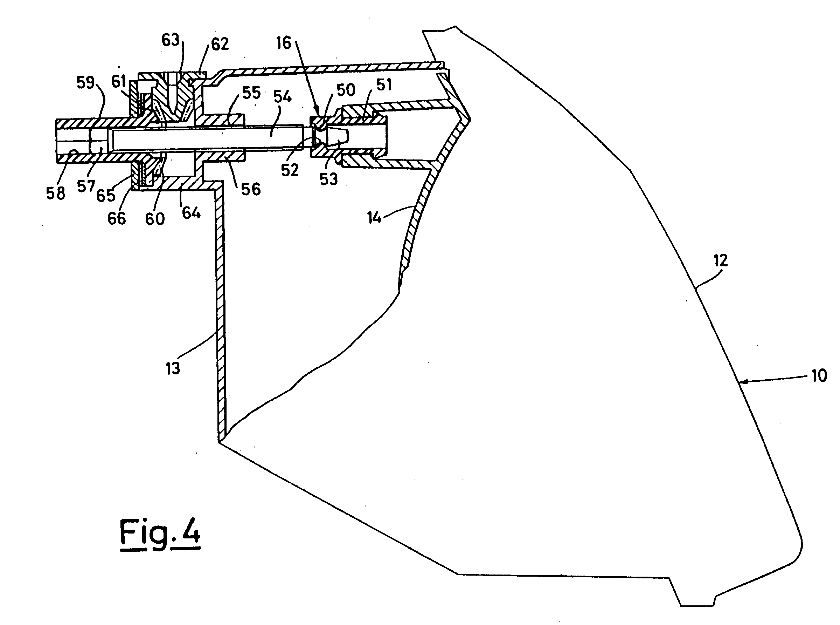

By the reference numeral 14 a reflector is indicated, e.g., of half-ellissoidal shape, visible in Figures 3 and 4, which supports a lamp, not shown in the Figures, and which is linked to the container 13 by means of three pivots, generally indicated by the reference numerals 15, 16, 17, having substantially longitudinal axes.

The axes of the pivots 15, 16 and 17 are placed at the vertices of a substantially right-angled triangle, with a substantially vertical cathetus, containing the axes of the pivots 15 and 17, and with a substantially transversal cathetus, containing the axes of the pivots 16 and 17.

The above-said triangle can be imagined by looking at Figure 1, wherein the vertical cathetus would coincide with the axis III-III and the transversal cathetus would join the axes III-III and IV-IV in their upper part.

As shown in Figure 3, the pivot 17 is formed by an annular protrusion 18, of semicircular cross-section, provided inside a bush of plastic material, 19, fastened to the reflector 14.

The protrusion 18 gets engaged inside an annular groove, 20, also of a semicircular shape, provided in the cone-frustum head, 21, of a spindle 22 screw-threaded in 23 and screwed in an also threaded bush 24 integral with the wall of the container 13. The screw spindle 22 is stationary inside the bush 24.

The pivot 15 is formed in its turn by an annular protrusion 26, of semicircular cross-section, provided inside a bush of plastic material, 27, fastened to the reflector 14.

The protrusion 26 gets engaged inside an annular groove 28, also of a semicircular shape, provided in the cone-frustum head, 29, integral with the bottom wall 30 of a bush of plastic material, 31, having the shape of a cup, slidingly mounted inside a hole provided through the wall of the container 13.

In the wall bottom 30 of the bush 31 a partially spherical hollow 32 is formed, inside which the spherical head 33 is housed of a stud 34, which is integral with an end of a screw spindle 35, provided with a fine-pitch external screw-thread 36. At its other end, the screw spindle 35 has a square-cross-section head 37, which engages with a hole 38 of square-cross-section, provided in a sleeve of plastic material, indicated by the reference numeral 39.

The sleeve 39 is integral with a ring bevel gear indicated by the reference numeral 40, which inmeshes with a bevel gear indicated by the reference numeral 41, provided with a disc 42, equipped with notches 43, also visible in Figure 2, which can be engaged by a drive tool.

Both bevel gears 40 and 41 are supported inside a box of a plastic material, indicated by the reference numeral 44.

In Figure 3 the washers 67 of self-lubricating material are visible, which are interposed between the ring gear 40 and a cover 46 of the box 44.

With the box 44 a bush indicated by the reference numeral 45 is integral, which is provided with an internal screw-thread which inmeshes with the screw-thread 36 of the screw spindle 35; the bush 45 is also equipped with an external, large-pitch screw-thread 46, which inmeshes with the internal screw-thread of a bush 47 fastened to the wall of the container 13.

With the bush 45 a longitudinal finger 48 is integral, which gets engaged inside peripheral slots 49 with which the bush 47 is provided, and are also visible in Figure 2.

The slots 49 are longitudinal, and are spaced-apart by rather large pitches.

The pivot 16, shown in Figure 4, is also formed by an annular protrusion 50, of semicircular cross-section, provided inside a bush of plastic material 51, fastened to the reflector 14.

The protrusion 50 gets engaged inside an annular groove 52, also having a semicircular cross-section, provided in the cone-frustum head, 53, of a spindle 54 provided with an external fine-pitch screw-thread 55 which inmeshes with the screw-thread of a bush 56 integral with the wall of the container 13.

The screw spindle 54 is also provided with a square head 57, which gets engaged inside a hole 58 of square cross-section, provided in a sleeve of a plastic material, 59.

The sleeve 59 is integral with a ring bevel gear indicated by the reference numeral 60, which inmeshes with a bevel gear indicated by the reference numeral 61, provided with a disc 62, equipped with notches 63, which can be engaged by a drive tool.

Both bevel gears 60 and 61 are supported inside a box of plastic material, indicated by the reference numeral 64, integral with the wall of the container 13 and between its cover 65 and the bevel gear 60 washers 66 of a self-lubricating material are interposed.

The adjustment of the orientation of the headlight 10 relatively to the vertical axis containing the axes of the pivots 15 and 17, and concident with the axis III-III, is carried out by longitudinally shifting the pivot 16, i.e., turning in and out the spindle 54 inside the sleeve 56.

The bevel gear 61 is caused to rotate by means of a drive tool, such as, e.g., a star screwdriver, and through the ring bevel gear 60, it causes the sleeve 59 to rotate; this latter, in its turn, drives the spindle 54 to rotate, through the square head 57.

Inasmuch as the screw-thread 55 of the spindle 54 is a fine-pitch screw-thread, a gradual adjustment is carried out, which also makes it possible small longitudinal shifts to be achieved.

The adjustment in the orientation of headlight 10 relatively to the transversal axis containing the axes of the pivots 16 and 17 is carried out in a gradual way by means of the bevel gear 41, is an analogous way to as previously disclosed for pivot 16, until the bush 45 is made integral with the container 13 by the link between the finger 48 and the bush 47.

The adjustment in the orientation of headlight 10, still relatively to the transversal plane containing the axes of the pivots 16 and 17, is carried out with large shifts e.g., in case of changes in vehicle load, between a minimum and a maximum, by rotating the box 44 and shifting the finger 48 from a slot 49 into another slot, so that the bush 45 turns in or out relatively to the bush 47.

## Claims

1. Device for adjusting the orientation of the light beam emitted by the headlight of a motor-vehicle, wherein the same headlight is substantially constituted by a reflector (14), to which a lamp is fastened, by a container (13), suitable for supporting the same reflector (14), closed in its front portion by a transparent wall (12), which performs the task of refracting the light beam, and is fastened to the bodywork of the motor-vehicle, wherein said reflector (14) is linked to said container (13) by means of three pivots (15,16,17) positioned at the vertices of a triangle, wherein the above-said pivots (15,16,17) are connected with screw spindles (35,54,22), being substantially parallel to the longitudinal axis of the vehicle, and supported by bushes (45,56,24), wherein at least one of the spindles (35) is operatively connected with drive means (40,41,37) which can be actuated in a fine-step mode, the first bush (45) being supported and screwable inside a further bush (47), in its turn integral with said container (13), with means (46, 48) being provided for retaining the first bush (45), with the possibility of removal, in angular positions predetermined relatively to the said further bush (47), characterised in that the second (56) and the third (24) bush are integral with the container (13) and its second screw spindle is connected to a further drive means (60,61,57) which can be actuated in a fine-step mode, both said drive means (40,41,37,60,61,57) being supported inside respective boxes (44,64) integral with the same bushes (45,56), the third spindle (22) being stationary inside the third bush (24), and in that said driving means (40,41,37/60,61,57) comprise ring bevel gears (40,60) which are respectively integral with a first (39) and a second (59) sleeve and which have a common axis with the respective screw spindles (35,54), the sleeves (39,59) being rotatably supported inside said boxes (44,64), the first (35) and the second (54) spindles being provided with square heads (37,57) which get engaged inside the corresponding square holes (38,58) of respectively the first (39) and the second sleeve (59), the ring bevel gears (40,60) meshing with corresponding gears (41,61), which in their turn are rotatably supported inside said boxes (44,64) and are provided with notches (43,63) for engaging drive tools.

2. Device according to claim 1, characterised in that said first pivot (15) is formed by an annular protrusion (26) of semicircular cross-section, provided inside a bush (27) fastened to said reflector (14), wherein said protrusion (26) gets engaged inside an annular groove (28) having a semicircular shape and provided in the cone-frustum head (29) of a cup-shaped bush (31) which is fastened inside said container (13) and provided with a partially spherical hollow (32), inside which a spherical head (33) on a stud (34) integral with the first screw spindle (35) is housed.

3. Device according to claim 1, characterized in that each of said second and third pivots (16,17) is formed by an annular protrusion (18,50) of semicircular cross-section, provided inside a bush (19,51) fastened to said reflector (14), wherein said protrusion (18,50) gets engaged inside a semi-circular-shaped annular groove (20,52), provided in the cone-frustum head (21,53) of the respective screw spindles (54,22).

4. Device according to calim 1, characterised in that said retaining means comprise a substantially longitudinal finger (48) integral with said first bush (45), which can be engaged, by yielding, inside substantially longitudinal peripheral slots (49) spaced apart from each other by rather large pitches provided in said further bush (47) in order to link said first bush (45) to said further bush (47).

5. Device according to claim 1, characterised in that said first bush (45) is supported inside said further bush (47) by means of a large-pitch screw-thread (46).

6. Device according to claim 1, characterised in that said first screw spindle (35) and said second screw spindle (54) are supported inside their respective bushes (45,56) by means of fine-pitch screw-threads (36,55).

## Patentansprüche

1. Vorrichtung zum Einstellen der Richtung der Lichtstrahlen, die vom Scheinwerfer eines Kraftfahrzeuges ausgesandt werden, wobei der Scheinwerfer im wesentlichen durch einen Reflektor (14) gebildet wird, in dem eine Birne befestigt ist, durch ein Gehäuse (13), in dem der Reflektor (14) in geeigneter Weise gelagert ist und das an seiner Vorderseite durch eine durchsichtige Scheibe (12) abgeschlossen ist, die dazu dient, die Lichtstrahlen zu brechen und das in der Karosserie des Kraftfahrzeuges befestigt ist, wobei der Reflektor (14) am Gehäuse (13) mit Hilfe von drei Drengelenken (15, 16, 17) angelenkt ist, die jeweils an den Spitzen eines Dreieckes angeordnet sind, wobei die Drehgelenke (15, 16, 17) mit Schraubspindeln (35, 54, 22) verbunden sind, die im wesentlichen parallel zur Längsachse des Kraftfahrzeuges verlaufen und in Buchsen (45, 56, 24) gelagert sind, wobei wenigstens eine der Schraubspindeln (35) wirkungsmäßig mit einer Antriebvorrichtung (40, 41, 37) verbunden ist, die in kleinen Schritten betätigbar ist und wobei die erste Buchse (45) innerhalb einer weiteren Buchse (47) gelagert und schraubenverdrehbar ist, die ihrerseits am Gehäuse (13) befestigt ist, wobei Mittel (46, 48) zum Festhalten der ersten Buchse (45), mit der Möglichkeit der Entfernung, in vorbestimmten Winkelstellungen relativ zur weiteren Buchse (47) vorgesehen sind, dadurch **gekennzeichnet,**
- daß die zweite (56) und dritte (24) Buchse einstückig mit dem Behälter (13) verbunden sind und daß die zweite Schraubspindel mit einer weiteren Antriebsvorrichtung (60, 61, 57) verbunden ist, die in kleinen Schritten betätigt werden kann, wobei beide Antriebsvorrichtungen (40, 41, 37, 60, 61, 57) jeweils innerhalb von Kästen (44, 64) gelagert sind, die mit den Buchsen (45, 56) einstückig ausgebildet sind, wobei die dritte Spindel (22) innerhalb der dritten Buchse (24) stationär ist; und
- daß die Antriebsvorrichtungen (40, 41, 37 / 60, 61, 57) Ring-Kegelzahnräder (40, 60) umfassen, die jeweils mit einer ersten (39) und einer zweiten (59) Hülse einstückig sind und die mit den jeweiligen Schraubspindeln (35, 54) eine gemeinsame Achse haben, wobei die Hülsen (39, 59) drehbar innerhalb der Kästen (44, 64) gelagert sind und die erste (35) und zweite (54) Spindel mit rechteckigen Köpfen (37, 57) versehen sind, die in entsprechende im Querschnitt rechteckige Löcher (38, 58) jeweils der ersten (39) und zweiten (59) Hülse eingreifen, wobei die Ring-Kegelräder (40, 60) mit entsprechenden Kegelrädern (41, 61) in Eingriff sind, die ihrerseits drehbar innerhalb der Kästen (44, 64) gelagert und mit Ausnehmungen (43, 63) zum Eingriff von Antriebswerkzeugen versehen sind.

2. Vorrichtung nach Anspruch 1, dadurch gekennzeichnet, daß das erste Drehgelenk (15) durch einen ringförmigen Vorsprung (26) mit halbkreisförmigem Querschnitt gebildet wird, der innerhalb einer Buchse (27) vorgesehen ist, die am Reflektor (14) befestigt ist, wobei dar Vorsprung (26) in eine Ringnut (28) eingreift, die im Querschnitt halbkreisförmig ist und die in einem kegelstumpfförmigen Kopf (29) einer tassenförmigen Buchse (31) angebracht ist, die innerhalb des Gehäuses (13) befestigt und mit einem teilweise kugelförmigen Hohlraum (32) versehen ist, in dem ein Kugelkopf (33) einer Stange (34) aufgenommen ist, die ihrerseits einstückig mit der ersten Schraubspindel (35) ausgebildet ist.

3. Vorrichtung nach Anspruch 1, dadurch gekennzeichnet, daß jedes der zweiten und dritten Drehglenke (16, 17) durch einen ringförmigen Vorsprung (18, 50) von halbkreisförmigem Querschnitt gebildet wird, der innerhalb einer Buchse (19, 51) vorgesehen ist, die jeweils am Reflektor (14) befestigt ist, wobei der Vorsprung (18, 50) jeweils in eine im Querschnitt halbkreisförmige Ringnut (20, 52) eingreift, die am kegelstumpfförmigen Kopf (21, 53) der jeweiligen Schraubspindel (54, 22) eingearbeitet ist.

4. Vorrichtung nach Anspruch 1, dadurch gekennzeichnet, daß die Haltemittel einen im wesentlichen langgestreckten Finger (48) umfassen, der mit der ersten Buchse (45) einstückig ausgebildet ist und der nachgiebig in im wesentlichen langgestreckte Umfangsschlitze (49) eingreifen kann, die voneinander um relativ große Schritte entfernt in der weiteren Buchse (47) angebracht sind, um die erste Buchse (45) an der weiteren Buchse (47) anzulenken.

5. Vorrichtung nach Anspruch 1, dadurch gekennzeichnet, daß die erste Buchse (45) innerhalb der weiteren Buchse (47) mit Hilfe eines Schraubgewindes (46) mit großer Steigung gelagert ist.

6. Vorrichtung nach Anspruch 1, dadurch gekennzeichnet, daß die erste Schraubspindel (35) und die zweite Schraubspindel (54) innerhalb ihrer jeweiligen Buchsen (45, 46) mit Hilfe von Schraubgewinden (36, 55) mit feiner Steigung gelagert sind.

## Revendications

1. Dispositif de réglage de l'orientation du faisceau lumineux émis par le phare d'un véhicule à moteur, dans lequel ce phare est essentiellement constitué par un réflecteur (14) auquel une lampe est fixée et par un carter (13), qui convient pour supporter ce réflecteur (14), fermé au niveau de sa paroi avant par une paroi transparente (12) qui a pour fonction de réfracter le faisceau lumineux, ce carter étant fixé à la carrosserie du véhicule à moteur, dans lequel ledit réflecteur (14) est relié audit carter (13) au moyen de trois pivots (15, 16, 17) positionnés aux sommets d'un triangle, dans lequel les pivots mentionnés ci-avant (15, 16, 17) sont connectés à des tiges filetées (35, 54, 22) sensiblement parallèles à l'axe longitudinal du véhicule et supportées par ces manchons (45, 56, 24), dans lequel au moins l'une des tiges filetées (35) est connectée de façon opérationelle à un moyen d'entraînement (40, 41, 37) qui peut être actionné selon un mode à pas fin, le premier manchon (45) étant supporté et pouvant être vissé à l'intérieur de l'autre manchon (47) qui fait à son tour corps avec ledit carter (13) à l'aide d'un moyen (46, 48) qui est prévu pour retenir le premier manchon (45), la possibilité d'enlèvement, selon des positions angulaires prédéterminées par rapport audit autre manchon (47), étant offerte, caractérisé en ce que le second (56) et le troisième (24) manchons font corps avec le carter (13) et en ce que la seconde tige filetée est connectée à un autre moyen d'entraînement (60, 61, 57) qui peut être actionné selon un mode à pas fin, les deux moyens d'entraînement (40, 41, 37 ; 60, 61, 57) étant supportés à l'intérieur de boîtiers respectifs (44, 64) qui font corps avec lesdits manchons (45, 56), la troisième tige filetée (22) étant fixe à l'intérieur du troisième manchon (24) et en ce que ledit moyen d'entraînement (40, 41, 37 ; 60, 61, 57) comprend des roues dentées coniques (40, 60) qui font respectivement corps avec une première (39) et une seconde (59) douille et qui ont un axe commun avec les tiges filetées respectives (35, 54), les douilles (39, 59) étant supportées à rotation à l'intérieur desdits boîtiers (44, 64), la première (35) et la seconde (54) tiges filetées étant munies de têtes carrées (37, 57) qui s'engagent à l'intérieur de trous carrés correspondants (38, 58) respectivement de la première (39) et de la seconde (59) douille, les roues dentées coniques (40, 60) s'engrenant avec des roues dentées correspondantes (41, 61) qui à leur tour sont supportées à rotation à l'intérieur desdits boîtiers (44, 64) et qui sont munies d'encoches (43, 63) pour assurer une coopération avec des outils d'entraînement.

2. Dispositif selon la revendication 1, caractérisé en ce que ledit premier pivot (15) est formé par une protubérance annulaire (26) de section en coupe semi-circulaire prévue à l'intérieur d'un manchon (27) fixé audit réflecteur (14), dans lequel ladite protubérance (26) s'emboîte à l'intérieur d'une gorge annulaire (28) présentant une forme semi-circulaire et est appliquée dans la tête tronconique (29) d'un manchon en forme de coupelle (31) qui est fixé à l'intérieur dudit carter (13) et qui est muni d'un évidement partiellement sphérique (32) à l'intérieur duquel une tête sphérique (33) placée sur une tige (34) qui fait corps avec la prmière tige filetée (35) est logée.

3. Dispositif selon la revendication 1, caractérisé en ce que chacun desdits second et troisième pivots (16, 17) est formé par une protubérance annulaire (18, 50) de section en coupe semi-circulaire qui est prévue à l'intérieur d'un manchon (19, 51) fixé audit réflecteur (14), dans lequel ladite protubérance (18, 50) s'emboîte à l'intérieur d'une gorge annulaire de forme circulaire (20, 52) prévue dans la tête tronconique (21, 53) des tiges filetées respectives (54, 22).

4. Dispositif selon la revendication 1, caractérisé en ce que ledit moyen de retenue comprend un doigt sensiblement longitudinal (48) qui fait corps avec ledit premier manchon (45), qui peut être emboîté de façon élastique à l'intérieur de fentes périphériques sensiblement longitudinales (49) espacées les unes des autres par des pas plutôt grands ménagés dans ledit autre manchon (47) afin de relier ledit premier manchon (45) audit autre manchon (47).

5. Dispositif selon la revendication 1, caractérisé en ce que ledit premier manchon (45) est supporté à l'intérieur dudit outre manchon (47) au moyen d'un filetage à pas important (46).

6. Dispositif selon la revendication 1, caractérisé en ce que ladite première tige filetée (35) et ladite seconde tige filetée (54) sont supportées à l'intérieur de leurs manchons respectifs (45, 56) au moyen de filetages à pas fin (36, 55).
